# EUROPEAN PATENT APPLICATION

(11) **EP 4 796 252 A1**
(43) Date of publication of application: **26.08.2026**
(21) Application number: 25861703.4
(22) Date of filing: 19.05.2025
(51) Int. Cl.: B23K 26/21

(54) **BATTERY CASING WELDING METHOD, BATTERY CASING AND BATTERY CELL**

(30) Priority: 31.12.2024 CN 202411987086; 31.12.2024 CN 202423305567 U
(71) Applicant: Eve Power Co., Ltd., Jingmen, Hubei 448000 (CN)
(72) Inventor: YANG, Xin, Jingmen, Hubei 448000 (CN); WU, Hao, Jingmen, Hubei 448000 (CN); CHEN, Liquan, Jingmen, Hubei 448000 (CN); SU, Bin, Jingmen, Hubei 448000 (CN)
(74) Representative: Nederlandsch Octrooibureau
(86) International application number: PCT/CN2025/095812
(87) International publication number: WO 2026/143957

(57) **Abstract**

The application discloses a welding method of a battery shell, a battery shell, and a battery cell, belonging to the technical field of battery manufacturing. The battery shell includes a cover plate and a shell. The cover plate includes a body and an overlapping protrusion. The overlapping protrusion is melted and welded to a top of the body by providing a welding laser to run a loop on a top of the overlapping protrusion. The method of top welding can also better realize the welding of the overlapping protrusion and the shell, which not only retains the advantage of high welding speed of the top welding, but also has the advantage of side welding to avoid light leakage into the battery cell.

## Description

This application claims priority to Chinese Patent Application No. 202411987086.1 and Chinese Patent Application No. 202423305567.8, filed on December 31, 2024, the disclosures of which are incorporated herein by reference in their entireties.

### TECHNICAL FIELD

The present application relates to the field of battery technologies, and in particular to a welding method of a battery shell, a battery shell, and a battery cell.

### BACKGROUND

In the process for welding a shell and a cover of a square lithium battery cell, main welding schemes currently used are top welding and side welding. A weld seam in the top welding is located at a top of the battery cell, with the primary advantage being high speed. However, there is a risk of the laser beam passing through the weld seam and leaking into the battery cell, potentially scorching a core package and causing a short circuit. In the side welding, the weld seam is located on a lateral side, and a shading platform is designed in structures of the shell and the cover of the battery cell, thereby eliminating the risk of the laser leaking into the battery cell.

### SUMMARY

During a welding process of the side welding, the battery cell needs to be turned over and welded in four stages. This welding method is inefficient. To improve efficiency, it requires adding more lasers for simultaneous welding, which increases the costs. Moreover, during the welding process of the side welding, after the shading platform melts, there is a risk of the laser beam scorching the plastic on a pole, leading to insulation failure.

The present application provides a welding method of a battery shell. The battery shell includes a cover plate and a shell, the cover plate includes a body and an overlapping protrusion, and the overlapping protrusion is convex at a top of a peripheral of the body. The shell forms an accommodating cavity and includes an opening, and the cover plate blocks the opening. The overlapping protrusion abuts on a top of the shell, and an outer edge of the overlapping protrusion is staggered inwardly at a preset distance H relative to an outer edge of a lateral sidewall of the shell. The welding method of the battery shell includes: melting and welding the overlapping protrusion to a top of the body by providing a welding laser to run a loop on a top of the overlapping protrusion.

The present application also provides a battery shell, which is manufactured using the welding method of the battery shell described above. A weld pool is formed vertically at a welding position of the battery shell. A raised height of the weld pool at a top of the cover plate is defined as H2, where H2 = 0 mm; and/or a raised height of the weld pool at a side surface is defined as H1, where 0 mm ≤ H 1 ≤ 0. 2 mm.

The present application also provides a battery cell including the battery shell described above.

### BENEFICIAL EFFECTS

The present application provides a welding method of a battery shell. For a cover plate provided with an overlapping protrusion, the prior arts adopt a side welding method for welding, and for a square battery cell, it needs to be welded in four stages. In the present application, the outer edge of the overlapping protrusion is staggered inwardly at a preset distance H relative to an outer edge of a lateral sidewall of the shell, the welding of the overlapping protrusion and the shell can also be achieved by a top welding method. This approach not only retains the advantage of the high welding speed of the top welding, but also has the advantage of side welding to avoid light leakage into the battery cell.

The present application also provides the battery shell. By welding using the above-mentioned welding method of the battery shell, the size of the battery shell is more easily guaranteed, facilitating the subsequent PACK assembly.

The present application also provides the battery cell including the battery shell. By applying the above-mentioned battery shell, the battery cell has a higher qualified rate in size, facilitating the subsequent assembly.

### BRIEF DESCRIPTION OF DRAWINGS

FIG. 1 is a first partial cross-sectional view of a battery shell before welding according to embodiments of the present application.
FIG. 2 is a second partial cross-sectional view of the battery shell after welding according to embodiments of the present application.
FIG. 3 is a first partial cross-sectional view of the battery shell before welding according to embodiments of the present application.
FIG. 4 is a second partial cross-sectional view of the battery shell after welding according to embodiments of the present application.

Reference numerals:
10, cover plate; 11, body; 12, overlapping protrusion;
20, shell; 21, accommodating cavity;
30, weld pool; 31, trough section; 32, flat section; and
40, welding laser.

### DETAILED DESCRIPTION

In the description of the present application, unless otherwise expressly specified and limited, the terms "communicate", "connect", and "fix" are to be understood in a broad sense, for example, as a fixed connection, as a detachable connection, or as a one-piece connection; also as a mechanical connection or an electrical connection; or may be directly connected or indirectly connected by means of an intermediate medium; or may be internal communication of the two elements or interaction of the two elements. The specific meaning of the above terms in the present application may be understood by a person skilled in the art according to specific situations.

In the present application, unless otherwise specified and defined, a first feature is disposed "on" or "under" a second feature may include a direct contact between the first feature and the second feature, or a contact between the first feature and the second feature through other features rather than the direct contact. Moreover, that the first feature is "over", "above", or "on" the second feature includes that the first feature directly above and obliquely above the second feature, as well as that the first feature is higher than the second feature. That the first feature is "down", "below" or "under" the second feature includes that the first feature directly below and obliquely below the second feature, as well as that the first feature is lower than the second feature.

In the description of some embodiments of the present application, terms such as "above", "below", "left", "right", "front", "back" refer to the orientation or positional relationship shown in the appended drawings, and are only for the purpose of facilitating the description and simplifying of operation, rather than indicating or implying that the apparatus or component referred to must have a particular orientation or must be configured or operated in a particular orientation, therefore should not be construed as a limitation towards the present application. Furthermore, the terms "first" and "second" are used to distinguish between descriptions and have no particular meaning.

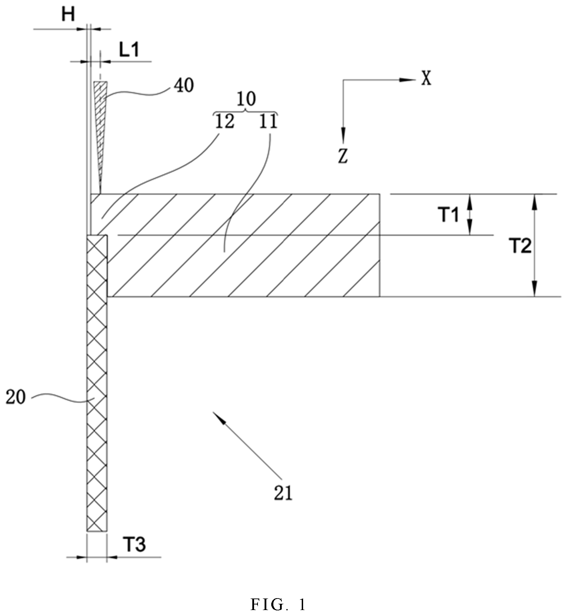

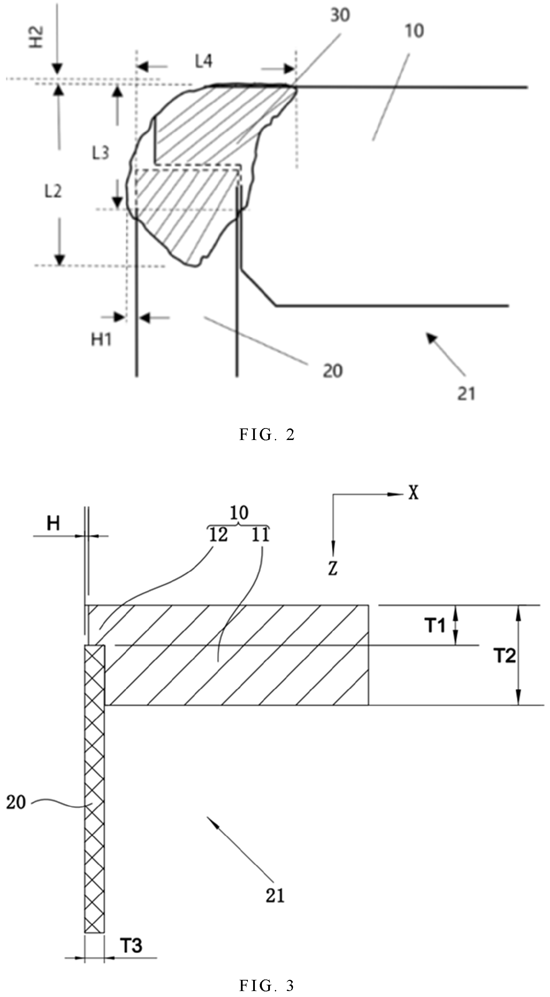

Some embodiments of the present application provide a welding method of a battery shell, which has the advantages of fast efficiency in top welding and the advantages of avoiding light leakage to the inside of the battery cell in side welding. Specifically, as shown in FIG. 1 and FIG. 3, the battery shell includes a cover plate 10 and a shell 20. The cover plate 10 includes a body 11 and an overlapping protrusion 12. The overlapping protrusion 12 is convex at a top of a peripheral of the body 11. The shell 20 forms an accommodating cavity 21 and includes an opening, the cover plate 10 blocks the opening. The overlapping protrusion 12 abuts a top of the shell 20, and an outer edge of the overlapping protrusion 12 is staggered inwardly at a preset distance H relative to an outer edge of a lateral sidewall of the shell 20. The welding method of the battery shell includes:

S10: melting and welding the overlapping protrusion 12 to a top of the body 11 by providing a welding laser 40 to run a loop on a top of the overlapping protrusion.

It can be understood that, for the cover plate 10 provided with the overlapping protrusion 12, the prior arts adopt the side welding method for welding, and for a square battery cell, it needs to be welded in four stages. In the present application, the outer edge of the overlapping protrusion 12 is staggered inwardly at a preset distance H relative to an outer edge of a lateral sidewall of the shell 20, the welding of the overlapping protrusion 12 and the shell 20 can also be achieved by the top welding method. This approach not only retains the advantage of the high welding speed of the top welding, but also has the advantage of side welding to avoid light leakage into the battery cell.

Optionally, the welding laser 40 is inwardly offset by L1 with respect to the outer edge of the overlapping protrusion 12 at the time of welding, where 0.1 mm ≤ L1 ≤ 0.2 mm. As a result, a part of the overlapping protrusion 12 is melted on both an inner side and an outer side of the welding laser 40, so that the overlapping protrusion 12 and the top of the body 11 are more sufficiently melted. Optionally, a value of L1 may be 0.1 mm, 0.12 mm, 0.15 mm, 0.18 mm, 0.2 mm, etc.

Optionally, as shown in FIG. 1, a thickness of the lateral sidewall of the shell 20 is defined as T3, where 0.25 mm ≤ T3 ≤ 0.8 mm. For example, the thickness of the shell 20 may be 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, etc. The shell 20 with a relatively thin thickness has poor structural strength, making it difficult to support the cover plate 10 and potentially leaving insufficient material during laser welding, which may allow the laser to penetrate into the battery cell, leading to short circuits, etc. The shell 20 with a relatively thick thickness results in an excessive weight of the battery cell. The thickness in this design of the present application strikes a balance, offering good structural strength.

Optionally, as shown in FIG. 1, a thickness of the overlapping protrusion 12 is defined as T1, where 0.2 mm ≤ T1 ≤ 0.8 mm. When T1 < 0.2 mm, since the overlapping protrusion 12 serves as a portion carrying the cover plate 10, the strength at a position where the shell 20 and the overlapping protrusion 12 are connected is insufficient, and the overlapping protrusion 12 is easily bent and deformed. Moreover, since the overlapping protrusion 12 serves as a main portion for melting, excessively thin design of the overlapping protrusion 12 may result in insufficient melting and unstable welding. When T1 > 0.8 mm, raw materials are wasted, and at the same time, the overlapping protrusion 12 is not easily penetrated during welding, which affects the welding effect.

Optionally, a total thickness of the cover plate 10 is defined as T2, where 0.4 ≤ T1/T2 ≤ 0.6. After this design, on the one hand, if the ratio is set too low, since the overlapping protrusion 12 serves as the portion carrying the cover plate 10, the overlapping protrusion 12 is easily bent and deformed at the position where the shell 20 and the overlapping protrusion 12 are connected; on the other hand, if the ratio is set too high, raw materials are wasted, and at the same time, the overlapping protrusion 12 is not easily penetrated during welding, which affects the welding effect. For example, T1/T2 may be equal to 0.4, 0.45, 0.5, 0.55, 0.6, etc.

Optionally, 1.0mm ≤ T2 ≤ 3.0mm. For example, the thickness of the cover plate 10 may be 1.0mm, 1.5mm, 2.0mm, 2.5mm, 3.0mm, etc. The cover plate 10 with a relatively thin thickness has poor structural strength, making it difficult to support other structures on the cover plate 10, thereby reducing the bending strength of the cover plate 10 and making it more difficult to maintain planarity. Additionally, during laser welding, insufficient material is remained, allowing the laser to penetrate into the battery cell, potentially causing short circuits. The cover plate 10 with a relatively thick thickness results in an excessive weight of the battery cell. The thickness of the cover plate 10 in this design of the present application is moderate, resulting in a lightweight structure with good structural strength, resistance to deformation, and ensured planarity.

It can be understood that after the lateral sidewall of the shell 20 and the overlapping protrusion 12 are welded, a weld pool 30 as shown in FIG. 2 is formed, and a shape of the weld pool 30 determines the final external dimensions of the battery shell. Protrusions of the weld pool 30 on a top surface of the cover plate 10 and a side surface of the shell 20 determine the external dimensions of the battery shell.

Optionally, 0.1 mm ≤ H ≤ 0.25 mm. When a staggering distance exceeds 0.25 mm, a contact area between the overlapping protrusion 12 and the shell 20 is insufficient, which may reduce the firmness of welding. When the staggering distance is less than 0.1 mm, the effect on thinning the protrusions is not obvious. For example, H = 0.1 mm, 0.13 mm, 0.15 mm, 0.18 mm, 0.2 mm, 0.22 mm, 0.25 mm, etc. Combined with the inwardly staggering distance of the welding laser 40, a raised height of the weld pool 30 on the lateral sidewall of the shell 20 is further reduced.

Some embodiments of the present application also provide a battery shell, which is made by the above welding method of the battery shell. As shown in FIG. 2, a raised height H2 of the weld pool 30 at the top of the cover plate 10 is defined as H2, where H2 = 0 mm. In order to facilitate understanding, in FIG. 2, a height of the flat section 32 protruding from the cover plate 10 is defined as H2. In the prior arts, this value is a positive value. By arranging that the outer edge of the overlapping protrusion 12 and the outer edge of the shell 20 are staggered by the distance H, top welding tests shows that the protrusion at this position disappears, thus ensuring the flatness and dimensional accuracy of the top of the cover plate 10. That is, in some embodiments of the present application, H2 indicated in the figure is absent.

Optionally, a raised height of the weld pool 30 on a side surface is defined as H1, where 0 mm ≤ H1 ≤ 0. 2 mm. That is to say, after testing, the height of the weld pool 30 protruding from the side surface of the battery shell is also reduced. In the prior arts, the raised height on the side surface is about 0.3 mm. After the design of some embodiments of the present application, after the top welding, the better effect can achieve that no protrusion is formed, most can achieve that the raised height is within 0.1 mm, and a small part can achieve that the raised height is about 0.2 mm, all are within a tolerance range of the size of the battery shell. All are within the tolerance range of the size of the battery shell, for example, the value of H1 is 0.02 mm, 0.05 mm, 0.07 mm, 0.1 mm, 0.2 mm, etc. Since the size of the battery shell is within the tolerance range, the battery shell is also easier to assemble during subsequent PACK assembly.

Alternatively, as shown in FIG. 2, a depth of fusion of the weld pool 30 is defined as L2, where 1.1 mm ≤ L2 ≤ 2.0 mm. The above setting ensures that a depth of the deepest position of the weld pool 30 is within this range. At this time, the depth is about ten times that of H, ensuring sufficient melting of the material at the welded position. For example, the value of L2 may be 1.0mm, 1.2mm, 1.5mm, 1.7mm, 1.9mm, 2.0mm, etc.

Optionally, as shown in FIG. 2, an effective depth of fusion of the weld pool 30 is defined as L3, where 0.8 mm ≤ L3 ≤ 1.3 mm. The effective depth of fusion refers to the portion where the cover plate 10 and the shell 20 are fused together, which means removing a part of the weld pool 30 that melts the shell 20. Through the aforementioned setup, it ensures that the cover plate 10 and the shell 20 are sufficiently fused during welding. In other words, the effective depth of fusion L3 must be greater than the value of T1. For example, the value of L3 may be 0.8mm, 0.9mm, 1.0mm, 1.1mm, 1.2mm, 1.3mm, etc.

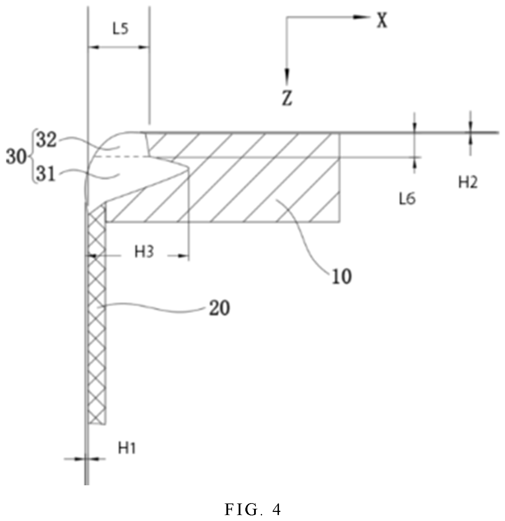

Optionally, as shown in FIG. 4, a width of fusion of the weld pool 30 is defined as L4, where 1.0 mm ≤ L 4 ≤ 2. 0 mm. Under this premise, L4 needs to be greater than T3, and also greater than a distance at which the overlapping protrusion 12 protrudes from the body 11. Through the above setting, it ensures that the cover plate 10 and the shell 20 are sufficiently fused, and the bonding stability of welding is improved. For example, the value of L4 may be 1.0 mm, 1.2 mm, 1.5 mm, 1.8 mm, 1.9 mm, etc.

A height direction (Z direction in the figure) perpendicular to the battery shell is defined as a first direction (X direction in the figure, the X direction is perpendicular to the Z direction). The first direction is a depth direction of fusion of the weld pool 30 generated by side welding. The weld pool 30 includes a trough section 31 and a flat section connected with each other. The trough section 31 is located below the flat section 32. In the first direction, a bottom of the trough section 31 is trough-shaped, and a bottom of the flat section 32 gently extends to the top of the cover plate 10. A cladding depth of the flat section 32 is defined as L5, where L5 ≥ 0.6 mm. It can be understood that during the process of side welding, by debugging, the value of the cladding depth of the flat section 32 corresponding to the weld pool 30 after welding is 0.6 mm or more, which can ensure that a melting volume of the cover plate 10 and the shell 20 is sufficient to firmly weld the shell 20 and the cover plate 10.

Optionally, the cover plate 10 is entirely made of light aluminum material, which has good thermal conductivity and can quickly dissipate the heat inside the battery cell.

It should be noted that a shape of the weld pool 30 after side welding is generally as shown in FIG. 2. The bottom of the flat section 32 is approximately planar and gently extends to the top surface of the cover plate 10.

Alternatively, as shown in FIG. 4, a dimension of the flat section 32 in the height direction is defined as L6, where L6 ≤ L5. It can be understood that during side welding, it is sufficiently ensured that the depth of L5 is sufficient to ensure the depth of fusion of the flat section. The larger L6 is, the more material is not melted inside the weld pool 30, so it is necessary to set L6 smaller to ensure the melting effect inside the weld pool 30.

Optionally, in the first direction, the depth of the deepest position of the trough section 31 is H3, where 1.0 mm ≤ H3 ≤ 2.0 mm. Through the above arrangement, the depth of the deepest position of the trough section 31 is guaranteed to be within this range, and at this time, the depth is about ten times that of H, ensuring sufficient melting of the material at the welded position. For example, the value of H3 may be 1.0 mm, 1.2 mm, 1.5 mm, 1.7 mm, 1.9 mm, 2.0 mm, etc.

Optionally, as shown in FIG. 4, a top height of the flat section 32 is flush with or lower than a surface of the cover plate 10. For convenience of understanding, in FIG. 3, the raised height of the flat section 32 protruding from the cover plate 10 is defined as H2, and in the prior arts, this value is a positive value. By arranging that the outer edge of the overlapping protrusion 12 and the outer edge of the shell 20 are staggered by the distance H, side welding tests shows that the protrusion at this position disappears, thus ensuring the flatness and dimensional accuracy of the top of the cover plate 10. That is, in some embodiments of the present application, H2 indicated in the figure is absent.

Optionally, as shown in FIG. 4, the protrusion on the side surface of the weld pool 30 is located on a side of a centerline of the weld pool 30 close to the shell 20. In the prior arts, the protrusion on the side surface of the weld pool 30 is located at the centerline of the weld pool 30. In the present application, it is essentially due to the setting of H, causing the weld pool 30 as a whole to move to the right side in FIG. 4, driving the deformation of the protrusion on the side surface, and changing the raised height and position of the protrusion on the side surface.

Some embodiments of the present application also provide a battery cell including the battery shell described above. By applying the above-mentioned battery shell, the battery cell has a higher qualified rate in size, facilitating the subsequent assembly.

## Claims

1. A welding method of a battery shell, the battery shell comprising a cover plate (10) and a shell (20), the cover plate (10) comprising a body (11) and an overlapping protrusion (12), and the overlapping protrusion (12) being convex at a top of a peripheral of the body (11); the shell (20) forming an accommodating cavity (21) and comprising an opening, the cover plate (10) blocking the opening, the overlapping protrusion (12) abutting a top of the shell (20), an outer edge of the overlapping protrusion (12) being staggered inwardly at a preset distance H relative to an outer edge of a lateral sidewall of the shell (20), and the welding method of the battery shell comprising:
S10: melting and welding the overlapping protrusion (12) to a top of the body (11) by providing a welding laser (40) to run a loop on a top of the overlapping protrusion (12).

2. The welding method of the battery shell according to claim 1, wherein the welding laser (40) is inwardly offset by L1 relative to the outer edge of the overlapping protrusion (12) during welding, where 0.1 mm ≤ L1 ≤ 0.2 mm.

3. The welding method of the battery shell according to claim 1, wherein a thickness of the overlapping protrusion (12) is defined as T1, where 0.2 mm ≤ T1 ≤ 0.8 mm.

4. The welding method of the battery shell according to claim 3, wherein a total thickness of the cover plate (10) is defined as T2, where 0.4 mm ≤ T1 / T2 ≤ 0.6 mm.

5. The welding method of the battery shell according to claim 4, wherein 1.0 mm ≤ T2 ≤ 3.0 mm.

6. The welding method of the battery shell according to any one of claim 1 to claim 5, wherein 0.1 mm ≤ H ≤ 0.25 mm.

7. The welding method of the battery shell according to any one of claim 1 to claim 5, wherein a thickness of the lateral sidewall of the shell (20) is defined as T3, where 0.25 mm ≤ T3 ≤ 0.8 mm.

8. A battery shell, manufactured using the welding method of the battery shell according to any one of claim 1 to claim 7, wherein a weld pool (30) is formed vertically at a welding position of the battery shell, and a raised height of the weld pool (30) at a top of the cover plate (10) is defined as H2, where H2 = 0 mm; and/or
a raised height of the weld pool (30) at a side surface is defined as H1, where 0 mm ≤ H 1 ≤ 0. 2 mm.

9. The battery shell according to claim 8, wherein a depth of fusion of the weld pool (30) is defined as L2, where 1.1 mm ≤ L2 ≤ 2.0 mm.

10. The battery shell according to claim 9, wherein an effective depth of fusion of the weld pool (30) is defined as L3, where 0.8 mm ≤ L3 ≤ 1.3 mm.

11. The battery shell of claim 8, wherein a width of fusion of the weld pool (30) is defined as L4, where 1.0 mm ≤ L4 ≤ 2.0 mm.

12. The battery shell according to claim 8, wherein a height direction perpendicular to the battery shell is defined as a first direction, the first direction is a depth direction of fusion of the weld pool (30) generated by side welding, the weld pool (30) comprises a trough section (31) and a flat section (32) connected with each other, the trough section (31) is located below the flat section (32), in the first direction, a bottom of the trough section (31) is trough-shaped, a bottom of the flat section (32) gently extends to the top of the cover plate (10), and a cladding depth of the flat section (32) is defined as L5, where L5 ≥ 0.6 mm.

13. The battery shell according to claim 12, wherein a dimension of the flat section (32) in the height direction is defined as L6, where L6 ≤ L5.

14. The battery shell according to claim 12, wherein in the first direction, a depth of the deepest position of the trough section (31) is defined as H3, where 1.0 mm ≤ H3 ≤ 2.0 mm.

15. The battery shell according to claim 12, wherein a top height of the flat section (32) is flush with or lower than a surface of the cover plate (10).

16. A battery cell, comprising the battery shell of any one of claim 8 to claim 15.
